# EUROPEAN PATENT APPLICATION

(11) **EP 4 024 932 A1**
(43) Date of publication of application: **06.07.2022**
(21) Application number: 20217525.3
(22) Date of filing: 29.12.2020
(51) Int. Cl.: H04W 12/084, H04W 12/108, H04L 29/06

(54) **METHOD AND DEVICE FOR PROVIDING AN AUTHORIZATION TO ACCESS AN INTERACTIVE GOOD**

(71) Applicant: Nagravision Sàrl, 1033 Cheseaux-sur-Lausanne (CH)
(72) Inventor: DEVALLONNE, Luc, 1033 Cheseaux-sur-Lausanne (CH); ZHAO, Yishan, 1033 Cheseaux-sur-Lausanne (CH)
(74) Representative: Poindron, Cyrille

(57) **Abstract**

A method for providing an authorization to access an interactive good (G) by means of an access right (R2) issued by a first bearer device (D1) to or for a second bearer device (D2) by using a wireless communication means, the method comprising:
- obtaining, by the first device (D1), a first information (i1) comprising at least a second device identifier (ID2),
- generating the access right (R2) including at least the second device identifier and an identifier (IDG) of the interactive good,
- providing, to the interactive good, a second information (i2) comprising at least the access right (R2),
- presenting, by the second device (D2), an access request (RQ) to the interactive good,
- performing an identity check in order to at least verify the second device identifier (ID2), and
- in case of successful identity check, providing the requested access to the interactive good.

## Description

### TECHNICAL FIELD

The present disclosure relates to the field of access control to smart devices such as interactive goods, and especially relates to an interactive good access authorization delivered by a first bearer device to a second bearer device. In a more specific and pragmatic context, the present disclosure may bring a new solution to authorize e.g. a third party to access your vehicle with his mobile phone. The subject-matters of the present disclosure relate to a method, a non-transitory computer-readable medium, a first and a second bearer device, an interactive good and a system.

### BACKGROUND

Within a classical and common scheme, there are everyday scenarios where the owner or the person in charge of an asset, such as a motor vehicle, gives access to this asset, e.g. by giving the vehicle keys to a third party who is totally unknown to him or her. Such a situation may lead giving access to a property worth several tens thousands of dollars to a stranger whom we blindly trust.

Numerous access controls to goods or services such as those in the field of multimedia needs a registering process before getting the appropriate access authorization. Typically, a third party must first register to a provider or a management center to get access to a service. If the authority grants the requested access, an access right will be sent to the third party, e.g. using an email via the cloud.

However, such a scheme is not optimum because it comprises at least some constraints which require to comply with administrative steps such as those required by a registration process. Usually, name, email address and an agreement to a standard form contract must be typically provided by a third party before any access granting. Furthermore, an access to the authority via the cloud (or the Internet) is also usually required, at least to send the registration request and to receive back the authorization to access the service. Depending on where the third party is located, the access to the cloud may be comprised, making it impossible to exchange data with a remote entity such as a remote server. This may occur when the third party is located e.g. within an underground parking lot or in a remote area.

Accordingly, there is a need for a more efficient and convenient solution to improve access to a service or to an interactive good provided to a third party, while at least partially overcoming the aforementioned issues and drawbacks. More specifically, such a solution should be at least partially implementable without having access to the cloud, to the Internet or to a remote entity.

### SUMMARY OF THE SOLUTION

To address this concern, the present disclosure suggests, as a first aspect, a method for providing an authorization to access an interactive good by means of an access right issued by a first bearer device to or for a second bearer device by using a wireless communication means, the method comprising:
- obtaining, by the first bearer device, a first information comprising at least a second bearer device identifier,
- generating the access right, said access right including at least the second bearer device identifier and an identifier of the interactive good,
- providing a second information to the interactive good, said second information comprising at least the access right,
- presenting, by the second bearer device, an access request to the interactive good,
- performing, by the interactive good, an identity check based on the access request and on the second information in order to at least verify the second bearer device identifier, and
- in case of successful identity check, providing the requested access to the interactive good.

Thanks to the present solution, providing an authorization to access an interactive good from a first bearer device to another one becomes simple and achievable in any condition. Indeed, according to at least a basic embodiment, this solution allows to limit the access to the interactive good to a specific bearer device in an environment where no specific connectivity to a remote server is required. This is especially true when, in a preferred embodiment, the wireless communication means relates to short-range wireless communication means for instance.

According to one embodiment, the method further comprises:
- generating a first signature by signing at least one data of the second information by the first bearer device,
- adding said first signature to the second information for the interactive good, and
- verifying said first signature during the identity check.

In one embodiment, providing the second information to the interactive good is performed via the second bearer device, and said method further comprising:
- generating a second signature by signing at least one data of the second information by the second bearer device,
- adding the second information and the second signature to the access request, and
- verifying the second signature during the identity check.

In another embodiment, the first information comprising at least a second bearer device public key in addition or as the second bearer device identifier, and said method further comprising:
- encrypting the access right, or any data comprised therein, by the first bearer device using the second bearer device public key before providing the second information to the interactive good via the second bearer device,
- decrypting the encrypted access right, or the encrypted data comprised therein, by the second bearer device using a related second bearer device private key, and
- adding the decrypted access right, or the decrypted data comprised therein, to the access request before presenting said request to the interactive good.

According to one embodiment, the method further comprising:
- encrypting the access right, or any data comprised therein, by the first bearer device using an interactive good public key before providing the second information to the interactive good, and
- decrypting the encrypted access right, or the encrypted data comprised therein, by the interactive good using a related interactive good private key.

In one embodiment, the access right further comprises an access permission comprising at least one of a limited using time, a limited moving range and a limited application scope of the interactive good, and in case of successful identity check, the requested access to the interactive good is provided in accordance with the access permission.

According to another embodiment, any exchange between at least two entities among the first bearer device, the second bearer device and the interactive good is encrypted.

Preferably, the method further comprising:
- performing a prevailing check by the interactive good for checking if the second bearer device identifier is on a revocation list and, if so, preventing the access to the interactive good when the access request is presented by the second bearer device.

In one embodiment, the wireless communication means is a short-range wireless communication means preferably based on data scanning, Near Field Communication protocol or Ultra Wide Band protocol.

According to a preferred embodiment, at least one of the first information and the second information is a QR code.

According to a second aspect, the present disclosure relates to a non-transitory computer-readable medium comprising program instructions for causing a processor to execute the method in accordance with any of its embodiments or with any possible combination of these embodiments.

According to a third aspect, the present disclosure relates to a first bearer device configured to provide an authorization to access an interactive good according to the method of any of its embodiment or possible combination of its embodiments, said access to the interactive good being carried out by means of an access right issued by said first bearer device to a second bearer device, said first bearer device comprising:
- a communication interface at least configured to receive a first information, comprising at least a second bearer device identifier, and to send a second information comprising at least the access right, said communication interface being at least configured for supporting wireless communications, preferably short-range wireless communications,
- a processor at least configured to generate the access right and the second information, said right including at least the second bearer device identifier and an interactive good identifier, and
- a memory for storing at least data used by the processor.

According to a fourth aspect, the present disclosure relates to a second bearer device for providing an authorization to access an interactive good according to the method of any of its embodiment or possible combination of its embodiments, said second bearer device comprising:
- a communication interface at least configured to send a first information, to receive a second information comprising at least the access right, and to communicate an access request to the interactive good, said communication interface being at least configured for supporting wireless communications, preferably short-range wireless communications,
- a processor at least configured to generate the access request and the first information (i1) by at least including therein a second bearer device identifier, and
- a memory for storing at least data used by the processor.

According to a fifth aspect, the present disclosure relates to an interactive good configured to check an access request addressed thereto by means of an access right issued by a first bearer device to a second bearer device within a wireless communication means, preferably a short-range wireless communication means, according to the method of any of claims 1 to 11, said interactive good comprising:
- a communication interface at least configured to receive a second information and said access request including at least a second bearer device identifier,
- a processor at least configured to perform an identity check based on the access request and on a second information, in order to at least verify the second bearer device identifier, and to provide the requested access in case of successful identity check, and
- a memory for storing at least data used by the processor.

According to a seventh aspect, the present disclosure relates to a system comprising a first bearer device, a second bearer device and an interactive good for implementing the method according to any of its embodiment or any possible combination of its embodiments.

Other embodiments and advantages will be disclosed in the following detailed description.

### BRIEF DESCRIPTION OF THE DRAWINGS

The solution and the embodiments suggested in the present disclosure should be taken as non-limitative examples and will be better understood with reference to the attached figures in which:
Fig. 1 is an overview of different entities and exchanges that may be involved by the present method,
Fig. 2 depicts a flowchart of the method provided by the present solution, according to a first embodiment,
Figs. 3-6 successively depict, through some flow chart steps, other embodiments as variants of that disclosed in Fig. 2,
Fig. 7 provides a schematic illustration of a bearer device that may be used as first and/or second bearer device, and
Fig. 8 provides a schematic illustration of an interactive good which may be suitable for implementing the present method.

### DETAILLED DESCRIPTION

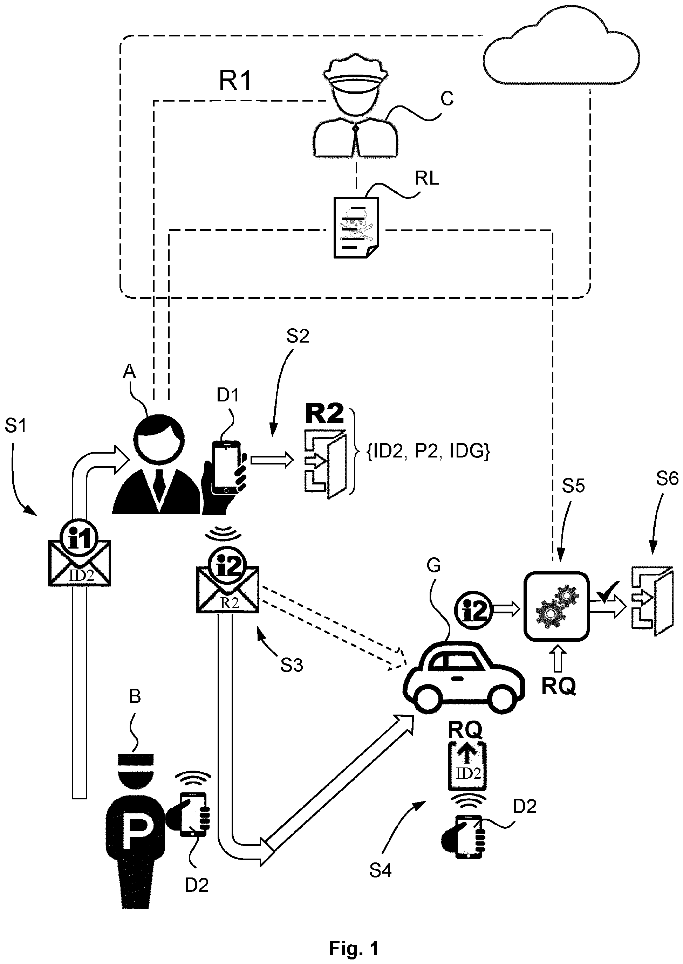

### Overview illustrated in Fig. 1

Fig. 1 shows a schematic overview of different entities and data exchanges made between these entities to implement the method of the present solution according to several embodiments. The dashed lines and elements surrounded by such a line in Fig. 1 are optional and refer to variants of the basic embodiment.

The above-listed Figures are based on a non-limitative example involving an interactive good G and at least two bearer devices D1, D2 which, in this case, belong respectively to a first and a second persons A, B. As shown in Fig. 1, the bearer devices D1, D2 may be mobile phones and the interactive good G may be a vehicle, more specifically a motor vehicle having interactive or smart properties. The first person A may be the owner or the person in charge of the interactive good G. The second person B may be a third party such as a valet parking which has to pickup the motor vehicle of the person A in order to take care of this interactive good G upon arrival and return of the person A.

It is pointed out that these entities are staged here in a scenario taken as an example to illustrate the solution of the present disclosure. Of course, other roles could be performed by these entities which may also have other form factors.

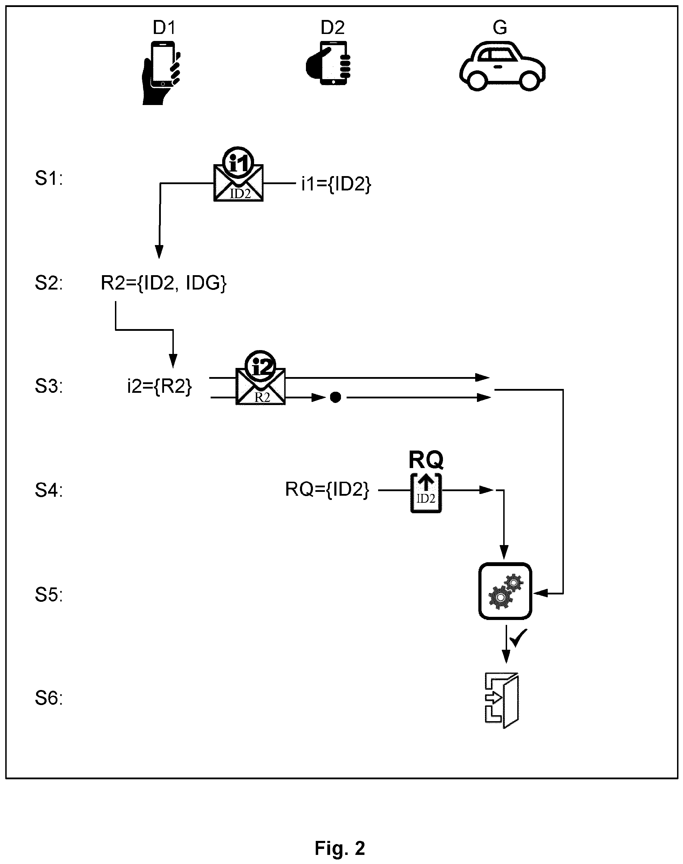

### First aspect and related main embodiments depicted in Figs 2-6

According to the first aspect, the present solution relates to a method for providing an authorization to access an interactive good G, which may refer to any smart device provided with interactive functions. Providing such an authorization is performed by means of an access right R2 issued by the first bearer device D1 to the second bearer device D2 or for this second bearer device, i.e. at least for the benefit or profit of the second bearer device D2.

The authorization, i.e. the access right R2, as well as any related data are preferably transmitted between the entities D1, D2 and G using a short-range wireless communication means. Advantageously, such a communication means does not require any connection to a wide network, such as a mobile network or the Internet for instance. The aforementioned short-range wireless communication means is even not a network given that it is typically limited to exchange data between only two entities at the same time. In addition, the short range wireless communication requires the two entities to be located close to each other in order to exchange data. Accordingly, each of the entities D1, D2, G may act as emitter or receiver within a short-range bidirectional communication. Therefore, data exchanges between these entities can be advantageously ensured in any conditions and in any location, even in areas where there is no communication network at all.

According to a first embodiment which is schematically shown in Fig. 1, the method comprises the following six main steps which are also successively illustrated in connection with the general flow chart of Fig. 2.

The first main step S1 (Figs. 1 and 2) aims to obtain, by the first bearer device D1, a first information i1 comprising at least the second bearer device identifier ID2. In this regard, it should be noted that each bearer device D1, D2 is provided with an identifier ID1, ID2 for unique identification purposes.

The second main step S2 aims to generate the access right R2. This is preferably achieved by the first bearer device D1. Alternatively, the access right R2 could be generated by an authority C or by any other entities from which the first device D1 is dependent. The access right R2 includes at least the second bearer device identifier ID2 and an identifier IDG of the interactive good G. By this way, the access right R2 clearly defines which device (here D2) benefits from the right R2 and for which interactive good G this right could be used. In the present example, since the right is generated for the second bearer device D2, it has been named R2. In another embodiment, a right generated to the benefit of the first bearer device D1 will be named R1 (see Fig. 1).

The third main step S3 aims to provide a second information i2 to the interactive good G. As schematically depicted in Figs. 1 and 2, this can be done either directly from the first bearer device D1 or indirectly via the second bearer device D2. The second information i2 comprises at least the access right R2. Preferably, the second information further comprises the second bearer device identifier ID2.

According to the fourth main step S4, the second bearer device D2 presents an access request RQ to the interactive good G. Said access request RQ preferably comprises the second bearer device identifier ID2, in particular if the second information i2 has been directly transmitted from the first bearer device D1 to the interactive good G. In one embodiment, the access request RQ may comprise the second information i2, and therefore the access right R2 included therein, in particular if the second information i2 is transmitted first from the first bearer device D1 to the second bearer device D2, and then from the second bearer device D2 to the interactive good G. In such a case, specifically adding the second bearer device identifier ID2 to the access request RQ may be omitted, especially if the second information i2 already comprises the second bearer device identifier ID2 together with the access right R2.

The fifth main step S5, aims to perform, by the interactive good G, an identity check based on the access request RQ and on the second information i2. The purpose of this identify check is to verify the second bearer device identifier ID2 presented through the access request RQ.

The sixth main step S6 aims to provide the requested access to the interactive good G in case of successful identity check. In other words, if the second bearer device identifier ID2 provided through the access request QR matches with the second bearer identifier ID2 provided with the access right R2, the access to the interactive good is granted by the interactive good G itself. In the case where the access request RQ merely comprises the second information, such a matching is considered as being always true, since the only second bearer device ID2 provided to the interactive good G through the access request RQ is the one comprised in the second information i2.

Thanks to the present method, the second bearer device identifier ID2 is transmitted in a way which can be qualified as sufficiently secure to the first bearer device D1 before generating the access right R2 which includes or is based on the second bearer device identifier ID2 in order to associate the second bearer device identifier ID2 to the access right R2. Accordingly, there is no identification of the third party B through the second bearer device identifier ID2 before issuing the access right R2. This means that this access right R2 is a bearer right because the smart good G identifies the second device D2 (through the second bearer device identifier ID2) and it recognizes that this access right R2 is assigned to the third party B due to the fact that the latter carries the second device D2.

Since the access right R2 is linked to the second bearer device identifier ID2, and since the second device D2 is identifiable at any time using its own or personal identifier which is the second device identifier ID2, therefore a malicious person which would be able to obtain, via a fraudulent way, the second information i2 comprising the access right R2 using a third device, would unable to get access to the interactive good G using such a third device. This results in an efficient and simplified method to get access to the interactive good G, even if no communication network is available. Thus, this solution provides both an easy and effective solution to responsibly grant an unknown third party B with an access to an interactive good, especially to a valuable interactive good G.

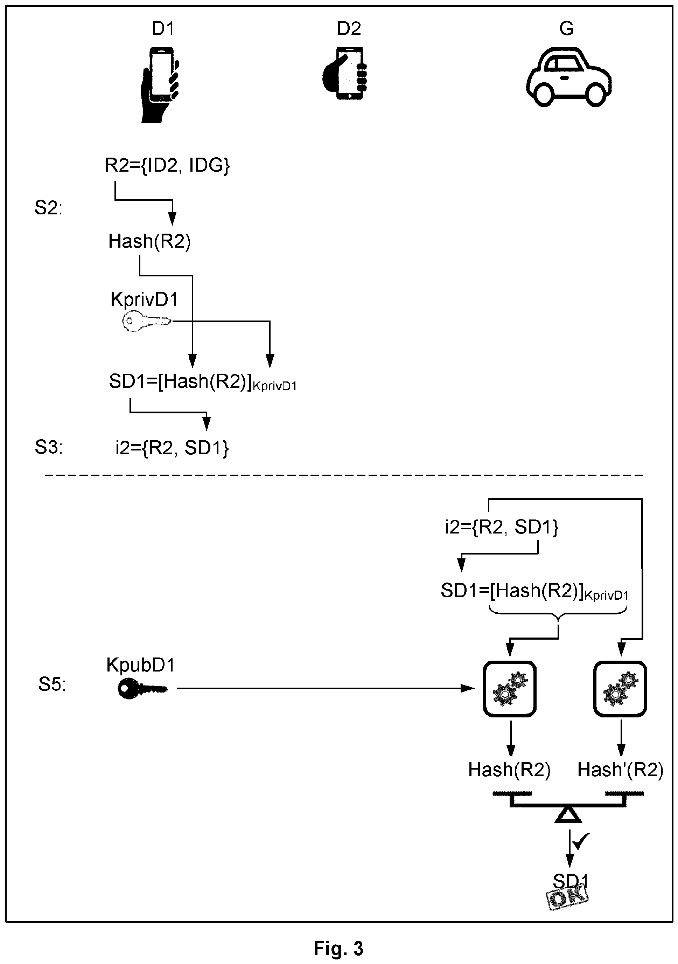

Fig. 3 relates to the second main embodiment of the present method. According to this second embodiment, a first signature SD1 is generated by signing at least one data of the second information i2 by the first bearer device D1. Accordingly, the access right R2 or a former signature regarding e.g. a previous right R1 received by D1 from the authority C (Fig. 1) may be signed for example. Generating the first signature SD1 is detailed in connection with the additional operations shown at step S2 of Fig. 3. Typically, if the right R2 is the data to be signed, a digest or a hash of the right R2 is calculated using a hash function, namely a one-way-function. Then, this digest, denoted Hash(R2), is encrypted using an encryption key. This encryption key may be the private key KprivD1 of the first device D1 or a shared secret key depending on whether the encryption scheme used to protect sensitive data relates to an asymmetric or symmetric encryption scheme. In the preferred example shown in Fig. 3, the encryption scheme is asymmetric so that the digest is encrypted using the private key KprivD1 of the first device D1. The result is the first signature SD1 which is also denoted by the expression SD1=[Hash(R2)]_{KprivD1} in Fig. 3.

Then, the first signature SD1 is added to the second information i2 intended to the interactive good G. Accordingly and as shown in step S3 of Fig. 3, the second information at least comprises the right R2 and the first signature SD1.

Finally, the first signature SD1 is verified during the identity check performed at the main step S5. To this end, the first signature SD1 is firstly extracted from the second information i2 received, directly or indirectly, from the first bearer device D1. Then, the appropriate cryptographic key, namely the public key of the first bearer device D1 in the present example, is used to decrypt the first signature SD1 so as to retrieve the digest Hash(R2). Then, the same hash function as that previously used for generating the digest by the first bearer device D1 is used by the interactive good G in order to calculate a second digest Hash'(R2) using the right R2 provided through the second information i2. As schematically depicted at the end of step S5 in Fig. 3, if the digest received Hash(R2) received via the second information i2 is the same as the second digest Hash'(R2) calculated by the interactive good G, the right R2 can be defined as being authentic or valid since the integrity of the right has been duly verified. Such verification may further be used as an additional criterion to either grant or deny the access when the access request RQ is presented to the interactive good G by the second bearer device D2.

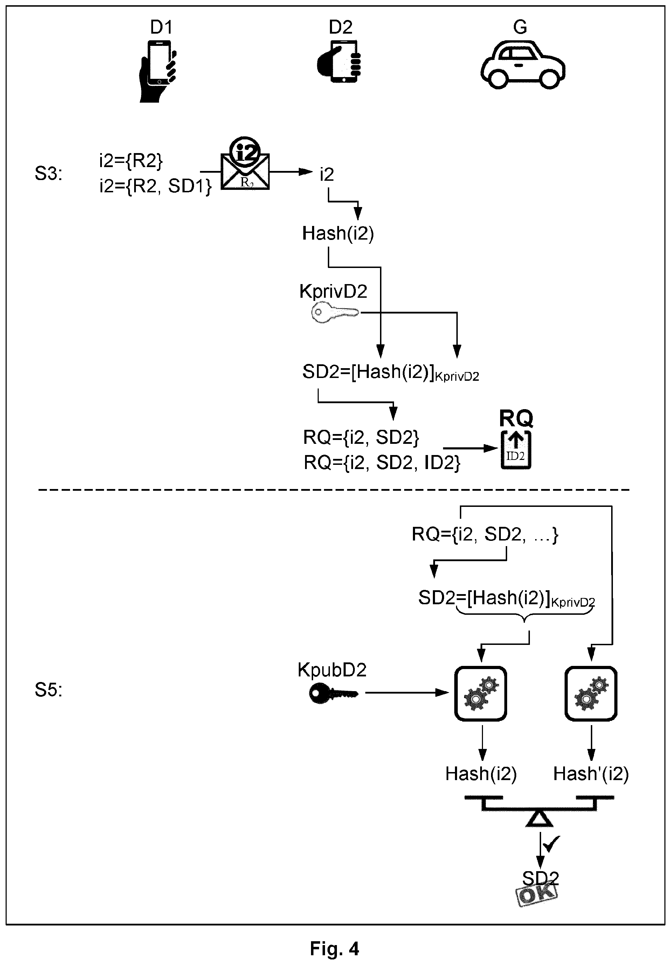

According to a third main embodiment, providing the second information i2 to the interactive good G is performed via the second bearer device D2. Such an embodiment is illustrated in the overview provided by Fig. 1, especially through the two successive arrows drawn in solid line between the second information i2 issued by the first bearer device D1 and the interactive good G. This embodiment is particularly useful if, for example, there is no possibility for the first bearer device D1 to directly transmit data such as the second information i2 to the interactive good G. In this case, the method may further comprise the following steps which are schematically depicted by the flow chart of Fig. 4.

The third main step S3 may further comprise generating a second signature SD2 by signing at least one data of the second information i2 by the second bearer device D2. It should be noted that the second information may e.g. comprise the right R2 or both the right R2 and the first signature SD1. Accordingly, the aforementioned at least one data may relate to the access right R2 or to the first signature SD1 for example. For this reason, the flow chart of Fig. 4 shows that the second signature SD2 is based on the second information i2. Accordingly, a digest Hash(i2) is calculated by the second bearer device D2 before being encrypted, using the private key KprivD2 of the bearer device D2, to obtain the second signature D2.

Then, the second information i2 and the second signature SD2 are typically added to the access request RQ, or constitute this access request, so that the access request RQ may include a set of data comprising i2, SD2 and ID2 if any.

Finally, the identity check performed at the fifth main step S5 may further comprise a step for verifying the second signature SD2, in order to determine whether it is authentic or not (i.e. whether it has integrity or not). This may be achieved by first decrypting the encrypted digest using the appropriate key which is the public key KpubD2 of the second bearer device D2 in the example of Fig. 4, so as to retrieve the digest Hash(i2) generated by the second bearer device D2 at step S3 (Fig. 4).

Then a second digest Hash'(i2) is computed using the same hash function applied to the same data as made for the previous digest Hash(i2), and it is checked whether the previous digest Hash(i2) received through the request RQ is the same as the calculated second digest Hash'(i2). If so, the second signature SD2 can be defined as being authentic or valid since the integrity of the second information i2, or at least one of the data included therein, has been duly verified. Such verification may further be used as an additional criterion to either grant or deny the access when the access request RQ is presented to the interactive good G by the second bearer device D2.

It should be noted that if the third main embodiment (shown in Fig. 4) is performed in addition to the second main embodiment (shown in Fig. 3), the interactive good G will have checked both the first and the second signature SD1, SD2 during the identity check.

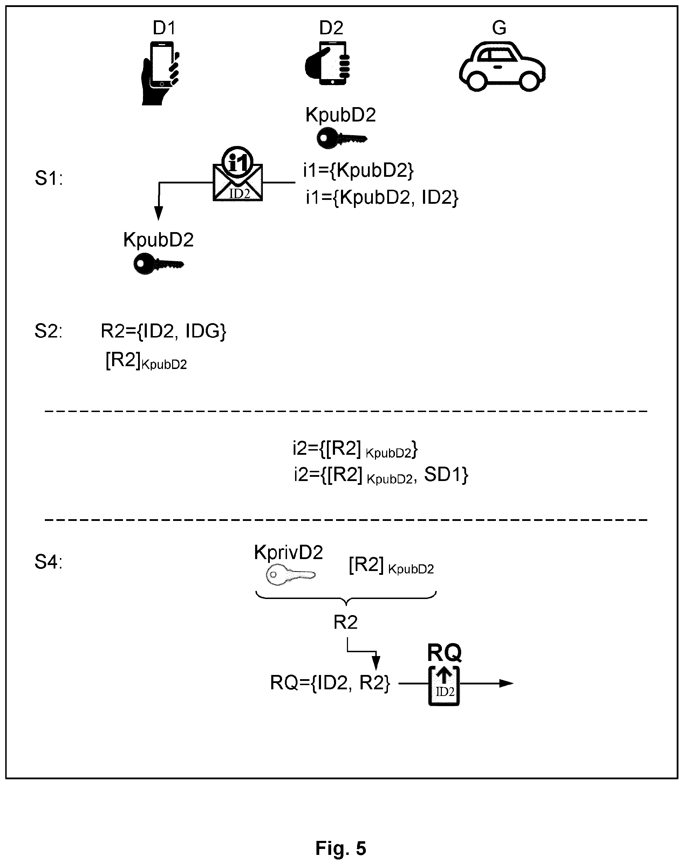

According to a fourth main embodiment schematically depicted in the flow chart of Fig. 5, the first information i1 comprises at least the second bearer device public key KpubD2 in addition or as the second bearer device identifier ID2. This means that the second bearer device public key KpubD2 may be used instead of the second bearer device identifier ID2 is order to identify this device in the first information i1. In addition, this embodiment further comprises the following steps.

Preferably as part of the main step S1, the access right R2 or any data comprises therein is encrypted by the first bearer device D1 using the second bearer device public key KpubD2 received thanks to the first information i1. This encryption is performed before the main step S3, namely before providing the second information i2 to the interactive good G via the second bearer device D2. As a reminder this second information comprises either the encrypted access right R2 or both the encrypted access right R2 and the first signature SD1 depending on which previous embodiment the present embodiment is applied.

Then, as shown in Fig. 5 the main step S4 further comprises a step performed by the second bearer device D2 and aiming to decrypt the encrypted access right R2, or the encrypted data comprised therein, using the related second bearer device private key KprivD2 or any suitable key according to the chosen encryption scheme (asymmetric or symmetric).

Once decrypted, the access right R2 or the related data comprised therein, may be added to the access request RQ before presenting the access request RQ to the interactive good G.

Thanks to this embodiment, the access right R2 is fully protected against any fraudulent capture made by a malicious person not only when the access right R2 is transmitted to the second bearer device D2 through the second information i2, but also when this access right R2 is located (e.g. stored) in the second bearer device D2 until the access request RQ is presented to the interactive good G. Accordingly, generating the access request RQ may be performed when the second bearer device D2 is about to present the access right RQ to the interactive good G. Generating the access request RQ at the ultimate or last moment before it is presented to the interactive good G is not limited to the present embodiment but may be undertaken for any other embodiment.

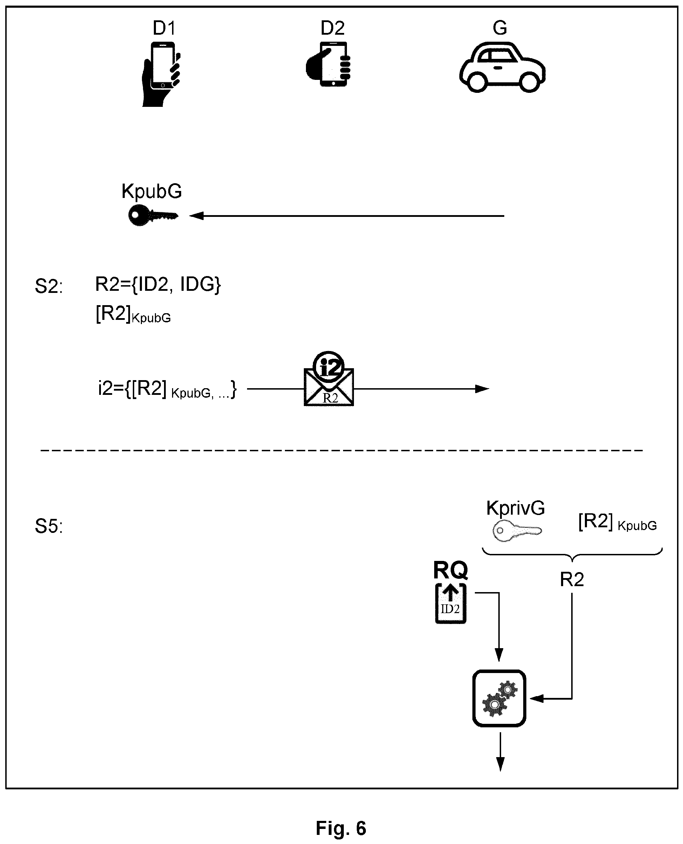

According to a fifth main step depicted in the flow chart of Fig. 6, the method further comprises a step, performed at the stage of the main step S2, for encrypting the access right R2, or any data comprised therein, using an interactive good public key (KpubG) before providing the second information i2 to the interactive good G. Such an encryption may be typically performed by the first bearer device D1 in charge of generating the second information i2 before its transmission to the interactive good G, either directly or indirectly via the second bearer device D2.

Then, the encrypted access right R2, or the encrypted data comprised therein, is decrypted by the interactive good G using the related interactive good private key KprivG. Once retrieve in its decrypted form, the access right R2 can then be processed in accordance with any embodiment disclosed in the present description.

This fifth embodiment results from the fact that the second bearer device D2 does not specifically need to use the access right R2 which is mainly designed to be used by the interactive good G for verification purposes. Accordingly, by encrypting the access right R2 using the public key of the interactive good G it becomes possible to efficiently protect this access right from any fraudulent capture between the instant where it is generated by the first bearer device D1 until it is used by the interactive good G.

Whatever the embodiment of the method disclosed in the first aspect, it should be noted that, according to a private/public keys scheme, a public key can always be easily obtained from the entity to which this public key belongs or from another entity or authority that would possess this public key. Only the private key remains a secret key that is never disclosed or transmitted by the entity to which it belongs.

### Other embodiments of the first aspect

In another embodiment, the access right R2 further comprises an access permission P2 (Fig. 1), so as to define and limit the scope of this right R2. To this end, the access permission P2 may comprise at least one of a limited using time, a limited moving range and a limited application scope of the interactive good G.

The limited using time may be a time interval, a time duration or a time duration relative to a starting time.

The limited moving range may relate to a limited distance or area within which the interactive good G may be used by the third party B. For example, if the interactive good G is a motor vehicle, the limited moving range may define e.g. a circle of a certain distance around the current parking position of the motor vehicle. Within this area, the third party B benefiting of a valid access right R2 is authorized to use the motor vehicle. Outside this predefined area, the motor vehicle G may take at least one countermeasure to prevent the third party B from further using the motor vehicle and/or to alert at least one of the driver, the first bearer device D1, the second bearer device D2 and e.g. an authority C that the third party B is driving beyond the predefined limited area. A global positioning system (GPS) or any similar system may be used to identify the position of the motor vehicle at any time.

The limited application scope may refer to a limited access area of the interactive good, so as to only authorize the access to at least one certain part of the interactive good. For instance, if the third party B has to drop off or pick up something in the trunk of the motor vehicle, the access permission P2 may comprise a limitation that provide the third party with the access to the trunk of the motor vehicle only. In one embodiment, the limited application scope relates to at least one of the access to the vehicle passenger compartment, the vehicle storage compartment, the vehicle engine compartment or the vehicle activation.

Accordingly, in case of successful identity check (main step S6 of Fig. 2), the requested access to the interactive good G may be provided in accordance with the access permission P2 comprised in the access right R2.

In one embodiment, any exchange between at least two entities among the first bearer device D1, the second bearer device D2, the interactive good G and the authority C, if any, may be advantageously encrypted. This may be performed using a shared secret key between at least two of these entities, or using a public key infrastructure (PKI) for example.

According to one embodiment schematically depicted in Fig. 1, the method may further comprise a step for performing a prevailing check by the interactive good G for checking if the second bearer device identifier ID2 is on a revocation list RL such as a black list for instance. Such a checking may be executed first when the access request RQ is presented by the second bearer device D2 to the interactive good G. The revocation list RL may be located (i.e. stored) within the interactive good G or may be located elsewhere, e.g. in the first bearer device D1 or in a server such as that of the authority C. This may e.g. depend on which entity is in charge of managing and updating the revocation list RL. Accordingly, if the revocation list RL is located outside the interactive good G, the latter may have to download it or to ask for knowing whether the second bearer device identifier ID2 is one of the identifiers listed on the revocation list, before granting the requested access. Instead of a black list, the revocation list may rather relate to a white list, in particular if the number of second bearer devices D2 a priori authorized is not too large.

According to a preferred embodiment, the wireless communication means is a short-range wireless communication means preferably based on data scanning, Near Field Communication protocol (NFC) or Ultra Wide Band protocol (UWB), or a combination of at least two of these technologies. Data scanning may be performed using the screen and the camera of the bearer devices D1, D2. Data or information to be scanned using a camera of one of the bearer devices may be first displayed on the screen of the other bearer device. NFC technology provides the possibility to exchange data between two devices over a distance of few centimeters only. UWB technology can be used as wireless communication means for providing very high network transfer rates over relatively short distances and at low power. This technology allows to target a specific receiving device among several bearer devices that may be displayed or listed on the sending device.

According to another preferred embodiment, at least one of the first information i1 and the second information i2 is a QR code. Advantageously, such a QR code may be easily generated for exchanging or accessing data in an unintelligible form to humans. In addition, QR codes are well convenient to be exchanged between two bearer devices on the basis of data or image that can be easily displayed and scanned.

As schematically shown in the attached Figures, at least one of the first bearer device D1 and the second bearer device D2 is preferably a mobile device, such as a smartphone for example. As also shown in these Figures, the interactive good G may be a vehicle, in particular a motor vehicle.

By reverting to Fig. 1, one can see that the top part of this Figure relates to an optional embodiment in which the authority C may be regarded as a supervisor for at least one of the entities shown in Fig. 1, such as the first bearer device D1 and/or the interactive good G. Such an authority C may be located in the cloud (i.e. at an unknown location within the Internet) and may relate to a rental agency from which the first person A may have obtained the interactive good G through a rental contract.

In case the interactive good G is a motor vehicle such as a car, the authority C may be regarded as a car rental agency. The latter may have provided the first bearer device D1 with a first access right R1 governing the access to the interactive good G assigned to the first bearer device D1. Accordingly, the right R2 provided by the first bearer device D1 to the second bearer device D2 may depend on the first right R1 provided by the authority C to the first bearer device D1. This also means that the rights R1 and R2 may be chained or successively imbedded within each other according to a dependent relationship.

Since the interactive good G may be aware of the first right R1 through an appropriate information issued e.g. by the authority C, in a similar way as the right R2 is provided to the interactive good G from the first bearer device D1, the interactive good G becomes fully able to successively verify each of the rights R2, R1 before granting the access to the third party B through the access request RQ. It should be noted that such a scheme is not limited to one or two rights R1, R2, but may theoretically include an unlimited number of rights, each of them assigned to a bearer device.

Although the encryption examples disclosed in the present disclosure are mainly based on an asymmetric scheme, symmetric encryptions may be also used, if appropriate, instead of at least a part of the encryptions based on a PKI infrastructure. To this end, shared secret keys between any of the related entities may e.g. be used, as well as secret keys derived from any suitable process such as Diffie-Hellman key exchange for instance. However, PKI infrastructure (i.e. private/public keys) remains the preferred scheme since there is no need to first share a common secret between the involved entities. Furthermore, private/public keys are usually required to generate and verify any digital signature.

### Second aspect

According to a second aspect, the present solution relates to a non-transitory computer-readable medium comprising program instructions for causing a processor to execute the method according to any of the embodiment or combination of embodiment disclosed in connection with the method of the first aspect.

Typically, at least the first and the second bearer devices D1, D2 are provided with a service application that can be downloaded in order to be executed in each of these devices. Such an application may be configured to implement the method disclosed in the first aspect according to any its embodiment or combination of embodiments. A computer program or an at least compatible application may be stored and run within the interactive good G for the same purposes.

### Third aspect

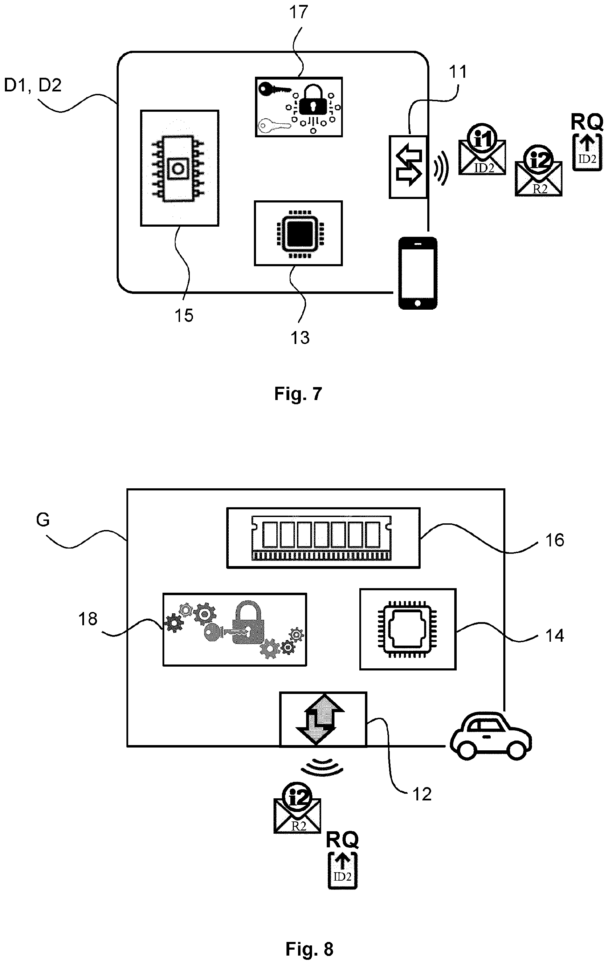

According to a third aspect, the present solution relates to the first bearer device D1 configured to provide an authorization to access the interactive good G in accordance with any embodiment or with any possible combination of embodiments of the method disclosed in connection with the above first aspect. To this end, the access to the interactive good G is carried out by means of the access right R2 issued by the first bearer device D1 to the second bearer device D2. As schematically depicted in Fig. 7, the first bearer device D1 may comprise:
- a communication interface 11 at least configured to receive the first information i1, comprising at least the second bearer device identifier ID2, and to send a second information i2 comprising at least the access right R2; this communication interface 11 being at least configured for supporting wireless communications, preferably short-range wireless communications,
- a processor 13 at least configured to generate the access right R2 and the second information i2; this access right R2 including at least the second bearer device identifier ID2 and an interactive good identifier IDG, and
- a memory 15 for storing at least data used by the processor 13.

In one embodiment, the first bearer device D1 may further comprise a cryptographic unit 17 for performing cryptographic operations, especially any cryptographic operations required in accordance with the method of the first aspect.

At least a part of the components 11, 13, 15, 17 of the first bearer device D1 may be located on a chipset or a system-on-a-chip, for instance to obtain a monolithic device or unit. It should be noted that the communication links, for exchanging data between these components, have been intentionally omitted in Fig. 7 for the sake of simplicity.

### Fourth aspect

According to a fourth aspect, the present solution relates to the second bearer device D2. This device is configured to receive the access right R2 issued by the first bearer device D1 for providing an authorization to access an interactive good G according to any embodiment or any possible combination of embodiments of the method disclosed in connection with the above first aspect. To this end and as shown in Fig. 7, the second bearer device D2 may comprise:
- a communication interface 11 at least configured to:
   - send a first information i1,
   - receive a second information i2 comprising at least the access right R2, and
   - communicate an access request RQ to the interactive good G.

Besides, it should be noted that this communication interface is at least configured for supporting wireless communications, preferably short-range wireless communications.

In addition, the second bearer device D2 further comprises:
- a processor 13 at least configured to generate the access request RQ and the first information i1 by at least including therein a second bearer device identifier ID2, and
- a memory 15 for storing at least data used by the processor 13.

In one embodiment, the second bearer device D2 may further comprise a cryptographic unit 17 for performing cryptographic operations, especially any cryptographic operations required in accordance with the method of the first aspect.

As shown above, the first and second devices D1, D2 may comprise the same components which may be arranged in the same manner. Accordingly, the processor 13 may react differently depending on it has to play the role of the first bearer device D1 or that of the second bearer device D2. Indeed, the same device could be considered to be sometimes the first bearer device D1, and sometimes the second bearer device D2.

### Fifth aspect

According to a fifth aspect, the present solution relates to the interactive good G configured to check the access request RQ addressed thereto by means of an access right R2 issued by the first bearer device D1 to the second bearer device D2 within a wireless communication means, preferably a short-range wireless communication means, in accordance with any embodiment or any possible combination of embodiments of the method disclosed in connection with the above first aspect. To this end and as shown in Fig. 8, the interactive good G may comprise:
- a communication interface 12 at least configured to receive:
   - the second information i2, and
   - the access request RQ including at least the second bearer device identifier ID2,
- a processor 14 at least configured to perform an identity check based on the access request RQ and on the second information i2, in order to at least verify the second bearer device identifier ID2 and to provide the requested access in case of successful identity check, and
- a memory 16 for storing at least data used by the processor 14.

In one embodiment, the interactive good G may further comprise a cryptographic unit 18 for performing cryptographic operations, in particular any cryptographic operations required in accordance with the method of the first aspect.

### Sixth aspect

According to a sixth aspect, the present solution relates to a system comprising the first bearer device D1, the second bearer device D2 and an interactive good G, for implementing any embodiment or any possible combination of embodiments of the method disclosed in connection with the above first aspect. To this end, the first and second bearer devices may be identical or similar to the bearer device disclosed above in connection with Fig. 7, and the interactive good G may be identical or similar to the interactive good disclosed above in connection with Fig. 8.

### FINAL CONSIDERATIONS

It should be noted that any feature or combination of features disclosed in connection with one of the aspects disclosed in the present disclosure may also be part of any of the other aspects, if applicable.

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method for providing an authorization to access an interactive good (G) by means of an access right (R2) issued by a first bearer device (D1) to or for a second bearer device (D2) by using a wireless communication means, the method comprising:
- obtaining, by the first bearer device (D1), a first information (i1) comprising at least a second bearer device identifier (ID2),
- generating the access right (R2), said access right (R2) including at least the second bearer device identifier (ID2) and an identifier (IDG) of the interactive good (G),
- providing a second information (i2) to the interactive good (G), said second information (i2) comprising at least the access right (R2),
- presenting, by the second bearer device (D2), an access request (RQ) to the interactive good (G),
- performing, by the interactive good (G), an identity check based on the access request (RQ) and on the second information (i2) in order to at least verify the second bearer device identifier (ID2), and
- in case of successful identity check, providing the requested access to the interactive good (G).

2. The method of claim 1, further comprising:
- generating a first signature (SD1) by signing at least one data of the second information (i2) by the first bearer device (D1),
- adding said first signature (SD1) to the second information (i2) for the interactive good (G), and
- verifying said first signature (SD1) during the identity check.

3. The method of claim 1 or 2, wherein providing the second information (i2) to the interactive good (G) is performed via the second bearer device (D2), and said method further comprising:
- generating a second signature (SD2) by signing at least one data of the second information (i2) by the second bearer device (D2),
- adding the second information (i2) and the second signature (SD2) to the access request (RQ), and
- verifying the second signature (SD2) during the identity check.

4. The method of any of preceding claims, wherein the first information (i1) comprising at least a second bearer device public key (KpubD2) in addition or as the second bearer device identifier (ID2), and said method further comprising:
- encrypting the access right (R2), or any data comprised therein, by the first bearer device (D1) using the second bearer device public key (KpubD2) before providing the second information (i2) to the interactive good (G) via the second bearer device (D2),
- decrypting the encrypted access right (R2), or the encrypted data comprised therein, by the second bearer device (D2) using a related second bearer device private key (KprivD2), and
- adding the decrypted access right (R2), or the decrypted data comprised therein, to the access request (RQ) before presenting said request (RQ) to the interactive good (G).

5. The method of any of preceding claims, further comprising:
- encrypting the access right (R2), or any data comprised therein, by the first bearer device (D1) using an interactive good public key (KpubG) before providing the second information (i2) to the interactive good (G), and
- decrypting the encrypted access right (R2), or the encrypted data comprised therein, by the interactive good (G) using a related interactive good private key (KprivG).

6. The method of any of preceding claims, wherein the access right (R2) further comprising an access permission (P2) comprising at least one of a limited using time, a limited moving range and a limited application scope of the interactive good (G), and in case of successful identity check, the requested access to the interactive good (G) is provided in accordance with the access permission (P2).

7. The method of any of preceding claims, wherein any exchange between at least two entities among the first bearer device (D1), the second bearer device (D2) and the interactive good (G) is encrypted.

8. The method of any of preceding claims, further comprising:
- performing a prevailing check by the interactive good (G) for checking if the second bearer device identifier (ID2) is on a revocation list and, if so, preventing the access to the interactive good (G) when the access request (RQ) is presented by the second bearer device (D2).

9. The method of any of preceding claims, wherein the wireless communication means is a short-range wireless communication means preferably based on data scanning, Near Field Communication protocol or Ultra Wide Band protocol.

10. The method of any of preceding claims, wherein at least one of the first information (i1) and the second information (i2) is a QR code.

11. A non-transitory computer-readable medium comprising program instructions for causing a processor to execute the method according to any of preceding claims.

12. A first bearer device (D1) configured to provide an authorization to access an interactive good (G) according to the method of any of claims 1 to 10, said access to the interactive good (G) being carried out by means of an access right (R2) issued by said first bearer device (D1) to a second bearer device (D2), said first bearer device (D1) comprising:
- a communication interface at least configured to receive a first information (i1), comprising at least a second bearer device identifier (ID2), and to send a second information (i2), comprising at least the access right (R2), said communication interface being at least configured for supporting wireless communications, preferably short-range wireless communications,
- a processor at least configured to generate the access right (R2) and the second information (i2), said right (R2) including at least the second bearer device identifier (ID2) and an interactive good identifier (IDG), and
- a memory for storing at least data used by the processor.

13. A second bearer device (D2) configured to receive an access right (R2) issued by a first bearer device (D1) for providing an authorization to access an interactive good (G) according to the method of any of claims 1 to 10, said second bearer device (D2) comprising:
- a communication interface at least configured to send a first information (i1), to receive a second information (i2) comprising at least the access right (R2), and to communicate an access request (RQ) to the interactive good (G), said communication interface being at least configured for supporting wireless communications, preferably short-range wireless communications,
- a processor at least configured to generate the access request (RQ) and the first information (i1) by at least including therein a second bearer device identifier (ID2), and
- a memory for storing at least data used by the processor.

14. An interactive good (G) configured to check an access request (RQ) addressed thereto by means of an access right (R2) issued by a first bearer device (D1) to a second bearer device (D2) within a wireless communication means, preferably a short-range wireless communication means, according to the method of any of claims 1 to 10, said interactive good (G) comprising:
- a communication interface at least configured to receive a second information (i2) and said access request (RQ) including at least a second bearer device identifier (ID2),
- a processor at least configured to perform an identity check based on the access request (RQ) and on a second information (i2), in order to at least verify the second bearer device identifier (ID2), and to provide the requested access in case of successful identity check, and
- a memory for storing at least data used by the processor.

15. System comprising a first bearer device (D1), a second bearer device (D2) and an interactive good (G) for implementing the method according to any of claims 1 to 10.
